# EUROPÄISCHE PATENTSCHRIFT

(11) **EP 2 142 606 B1**
(45) Veröffentlichungstag und Bekanntmachung des Hinweises auf die Patenterteilung: **02.11.2011**
(21) Anmeldenummer: 08749093.4
(22) Anmeldetag: 24.04.2008
(51) Int. Cl.: C09D 5/02, C09D 7/06, C08K 5/10

(54) **VERWENDUNG VON ESTERN ALS KOALESZENZMITTEL**
USE OF ESTERS AS COALESCING AGENT
UTILISATION D'ESTERS EN TANT QU'AGENTS DE COALESCENCE

(30) Priorität: 03.05.2007 DE 102007021139
(43) Veröffentlichungstag der Anmeldung: 13.01.2010
(73) Patentinhaber: Cognis IP Management GmbH, 40589 Düsseldorf (DE)
(72) Erfinder: BENE, Peter, 50765 Köln (DE); FROMMELIUS, Harald, 40789 Monheim (DE); SCHULTE, Heinz-Günther, 41564 Kaarst (DE); MEINHOLD, Annemarie, 40721 Hilden (DE); BERGMANN, Edda, 53859 Niederkassel (DE)
(86) Internationale Anmeldenummer: PCT/EP2008/003294
(87) Internationale Veröffentlichungsnummer: WO 2008/135170

(56) Entgegenhaltungen:
- WO-A-00/56823
- US-A1- 2007 093 579

## Beschreibung

### Gebiet der Erfindung

Die Erfindung betrifft die Verwendung von Estern der allgemeinen Formel R¹-COOR², worin R¹ ein Alkylrest mit 9 bis 23 C-Atomen ist und R² ein gesättigter Alkylrest ausgewählt aus der Gruppe Methyl, Ethyl, n-Propyl und i-Propyl ist, als Koaleszenzmittel, insbesondere für die Herstellung von Beschichtungsstoffen.

### Stand der Technik

Koaleszenzmittel (auch Filmbildehilfsmittel genannt) sind an sich bekannt. Sie werden wässrigen Beschichtungsstoffen zugesetzt und bewirken ein Verfilmen der dispergierten Polymerteilchen zu einem homogenen Lackfilm. Ihr Zusatz ist dann erforderlich, wenn die Filmbildetemperatur des Bindemittels oberhalb der Anwendungstemperatur liegt.

Bekannte Filmbildehilfsmittel sind: Ethylenglykolethylether, Ethylenglykolpropylether, Ethylenglykolbutylether, Ethylenglykolhexylether, Diethylenglykolmethylether, Diethylenglykolethylether, Diethylenglykolbutylether, Diethylenglykolhexylether, Propylenglykol-n-butylether, Dipropylenglykol-n-butylether, Dipropylenglykolmethylether, Tripropylenglykolmethylether, Propylenglykolphenylether, Propylenglykol-t-butylether, 2,2,4-Trimethyl-1,3-pentandiol-mono-isobutyrat, 2,2,4-Trimethyl-1,3-pentandioldiisobutyrat (vergleiche "Farbe + Lack, 101(7/1995), S. 606-609).

In letzter Zeit sind wasserbasierte Beschichtungen aus ökologischen Gründen sehr aktuell geworden. Traditionell wurden bei Latex-Beschichtungen, die insbesondere auf kleinen Teilchen synthetischer Kunststoffe wie Polyacrylaten basieren, Koaleszenzmittel in substanziellen Mengen eingesetzt. Diese Koaleszenzmittel (auch Verfilmungshilfsmittel genannt) werden den Beschichtungen zugesetzt, um die Filmbildung zu verbessern. Die Funktion beruht darauf, dass das Koaleszenzmittel weichmachend auf die Latexteilchen einwirkt, so dass diese zusammenfließen und einen kontinuierlichen Film ausbilden können. Dieser Film hat nach der Verdunstung des Wassers optimale Filmeigenschaften. Bei der Ausbildung eines Films ist die sogenannte Filmbildetemperatur von Bedeutung, bei der (bzw. unterhalb der) die Polymerteilchen zu einem Film zusammenfließen. Die üblichen Koaleszenzmittel senken die Filmbildetemperatur des Polymers.

Konventionelle Koaleszenzmittel sind bestimmte Ester und Ether; bekannte technische Standards sind der Hydroxyester "Texanol" von Eastman (auch oft TMB genannt; ein 2,2,4-Trimethyl-1,3-pentandiol-mono-isobutyrat) sowie "EGBE" von Union Carbide (Ethylenglykolmonobutylether).

Bereits 1976 wurde DE 24 43 645 publiziert. Hier wird explizit Benzoesäure-1,2-propandiol-monoester offenbart, allerdings speziell im Zusammenhang mit Aminoplasten. Die Ansprüche richten sich auf "modifizierte Aminoplaste", die Verbindungen des Typs Aryl-COO-X-OH als Modifizierungsmittel enthalten.

US 3,399,158 offenbart Diester von C₂₋₆-Dicarbonsäuren.

Im Jahre 1984 wurde das Patent US 4,489,188 erteilt. Als Koaleszenzmittel für Beschichtungen werden hier EO- und PO-Addukte an aromatische Carbonsäuren wie Benzoesäure offenbart.

US 4,894,406 von 1988 offenbart 2-Alkyl-1,3-Hexandiol-Alkylester, also spezielle Hydroxyester, als Koaleszenzmittel.

US 5,756,569 von 1996 offenbart 3-Alkoxy-Propionate als Koaleszenzmittel.

EP 069,839 B1 beansprucht die Verwendung von Hydroxyestergemischen als Verlaufshilfsmittel für wässrige Kunststoffdispersionen. Es sind solche Verbindungen, die durch Umsetzung von Propylenoxid mit aliphatischen C₇₋₁₂-Monocarbonsäuren zugänglich sind.

Sogenannte reaktive Koaleszenzmittel wurden bereits früh erwähnt, so zum Beispiel in US 4,141,868**.** Hier wurden Dicyclopentenyloxyethylmethacrylat eingesetzt, dem allerdings geruchliche Nachteile zugeschrieben werden.

Gemäß EP 599,478 A1 können Acetoacetate als reaktives Koaleszenzmittel eingesetzt werden.

EP 501,614 A2 von 1991 nennt Ester von Ketocarbonsäuren als Koaleszenzmittel.

Die Ansprüche des europäischen Patentes EP 1,169,397 B1 richten sich auf filmbildende Zusammensetzungen, bei der Polymere oder Prepolymere in einer wässrigen Phase emulgiert sind und wobei die Zusammensetzung ein Koaleszenzmittel enthält, der ein Ester ist und durch die Formel R-COOX charakterisiert ist. Dabei sind R und X Hydrocarbylgruppen oder substituierte Hydrocarbylgruppen. Wenigstens einer der beiden Reste muss wenigstens zwei C=C-Doppelbindungen enthalten.

US 2005/0182168 A1 offenbart eine Kombination von Glykolestern von Pflanzenölbasierten Fettsäuren und Antioxidantien. Propylenglykol-Monoester werden dabei speziell thematisiert.

WO 00/56823 offenbart filmbildende Zusammensetzungen mit einer wässrigen und einer dispergierten Phase, wobei letztere ein Polymer und ein Koaleszenzmittel enthält. Letzteres ist ein Ester, für den die strukturelle Maßgabe gilt, der Säurebaustein und/oder der Alkoholbaustein mindestens zwei C=C-Doppelbindungen enthalten müssen. Der technische Sinn dieser Vielzahl an Doppelbindungen besteht darin, dass das Koaleszenzmittel selbst reaktiv vernetzt werden soll, man spricht hier von einem reaktiven Koaleszenzmittel.

Anspruch 1 von US 6,762,230 B2 richtet sich auf Beschichtungszusammensetzungen enthaltend ein Latex-Polymer und ein Koaleszenzmittel der Formel R¹-(CO-Xᵣ-O)ₙ-R². Dabei ist R¹ eine organische Gruppe, X eine zweiwertige organische Gruppe, der Index r kann 0 oder 1 sein, der Index n kann im Bereich von 1 bis 10 liegen und R² ist Wasserstoff oder eine organische Gruppe. Sofern r den Wert 0 und n den Wert 1 annimmt und die Reste R¹ und R² Alkylreste sind, umschreibt die genannte Formel Fettsäureester. Es ist jedoch darauf hinzuweisen, dass Fettsäureester in der US 6,762,230 B2 nicht konkret offenbart sind. Vielmehr sind die konkret in Rede stehenden Koaleszenzmittel der US 6,762,230 B2 keine Fettsäureester.

Fettsäurealkylester sind in den beiden folgenden Schriften erwähnt: In EP 026,982 A1 aus dem Jahre 1980 werden wässrige Beschichtungs-Zusammensetzungen mit einem Polymer und einem Koaleszenzmittel geclaimt. Letzteres ist auszuwählen aus dreierlei "Sorten" von Estern, eine Sorte ist dabei durch die Formel R¹-COOR² charakterisiert. Dabei ist R¹ eine Alkyl- oder Arylgruppe und R² eine Alkylgruppe (außer Methyl). In dem die Seiten 11 und 12 überbrückenden Absatz wird explizit ausgeführt, dass in der o.g. Ester-Formel vorzugsweise gilt: R¹ = C₃₋₇ und R² = C₄₋₈ (beide Reste aliphatisch). Auf Seite 13, Zeilen 10-33 sind namentlich geeignete Ester aufgelistet. Auf Seite 13, Zeile 35ff wird ausdrücklich ausgeführt, dass Methyl- und Ester im Allgemeinen zu vermeiden sind, weil sie in Farbsystemen instabil sind (Hydrolyseneigung). Mithin wird hier einerseits dem Fachmann explizit davon abgeraten, Ester als Koaleszenzmittel einzusetzen, deren Alkoholbaustein Methanol oder Ethanol ist und implizit davon abgeraten, Ester als Koaleszenzmittel einzusetzen, deren Alkoholbaustein 3 oder 4 C-Atome aufweist (denn in der bevorzugten Ausführungsform ist umfasst wie oben erwähnt R² einen Bereich von 4-8 C-Atomen). Insbesondere sind keine Fettsäureester konkret offenbart, deren Alkoholbaustein 1 bis 3 C-Atome aufweist.

DE 24,49,471 A1 von 1974 beansprucht Ester geradkettiger C₂₋₆-Fettsäuren, wobei es sich bei dem Alkoholbaustein der Ester um aliphatische C₃₋₄-Alkohole handelt, als Lösungsmittel für Lacke. Von Koaleszenzmitteln ist hier nicht die Rede.

US2007/0093579 offenbart filmbildende Zusammensetzungen mit einer wässrigen und einer dispergierten Phase, die ein Polymer und ein Koaleszenzmittel enthält. Letzteres ist ein Methylester von Fettsäuren, insbesondere ein Methylester des Sojaöls oder des Sonnenblumenöls.

### Beschreibung der Erfindung

Es besteht ständiger Bedarf an neuen Koaleszenzmitteln. Es war daher die Aufgabe der vorliegenden Erfindung Koaleszenzmittel zur Verfügung zu stellen. Diese sollten sich insbesondere für die Herstellung von Beschichtungen wie Lacken, Farben und dergleichen eignen, aber auch für Klebstoffe. Ein besonders bevorzugtes Gebiet für den Einsatz der bereitzustellenden Koaleszenzmittel sind die so genannten Dispersionsfarben.

Der Begriff der Koaleszenzmittel (in der Literatur auch Verfilmungshilfsmittel oder Filmbildehilfsmittel genannt) ist dabei in dem oben dargestellten und dem Fachmann wohlvertrauten Sinne zu verstehen.

Es sei ausdrücklich festgestellt, dass sich die erfindungsgemäß zu entwickelnden Koaleszenzmittel insbesondere für den Einsatz in wässrigen Dispersionen von Kunststoffen bzw. Latexteilchen, die für Beschichtungszwecke jeglicher Art geeignet sind (zum Beispiel für wasserbasierte Lacke und Farben), bestimmt sind.
Derartige Dispersionen, die typischerweise durch Emulsionspolymerisation hergestellt werden und die neben Wasser, den in der Emulsionspolymerisation eingesetzten Hilfsstoffen und den Kunststoff- bzw. Latexteilchen weitere Bestandteile enthalten können, die für den jeweils gewünschten Beschichtungszweck üblicherweise eingesetzt werden, werden üblicherweise auf die zu beschichtende Oberfläche appliziert, danach er-folgt ein Verdunsten des Wassers und schließlich ist es wesentlich, dass die Polymer- bzw. Latexteilchen ineinander fließen und einen homogenen Film bilden. Dieser Prozess der Filmbildung setzt voraus, dass eine Mindesttemperatur eingehalten wird, die vom Fachmann Mindestfilmbildetemperatur (MFT) genannt wird. Beträgt die MFT eines Systems beispielsweise 20 °C, so bedeutet dies, dass eine Filmbildung nur dann erfolgreich verläuft, wenn die Temperatur 20 °C oder höher ist. Will man hingegen eine Filmbildung bei niedrigeren Temperaturen bewirken, zum Beispiel bei 10 °C oder noch niedrigeren Temperaturen, so muss man den genannten wässrigen Dispersionen ein Koaleszenzmittel in einer Menge zusetzen, dass die MFT auf den gewünschten Wert gesenkt wird.
In dieser Hinsicht hat sich die vorliegende Erfindung insbesondere zum Ziel gesetzt Koaleszenzmittel zu entwickeln, die die MFT von wässrigen Dispersionen von Kunststoff- bzw. Latexteilchen, die für beliebige Beschichtungszwecke bestimmt sind, möglichst effektiv zu senken.

Gegenstand der Erfindung ist die Verwendung von Estern der allgemeinen Formel (I)

R¹-COOR² (I)

worin bedeuten
- R¹ ein Alkylrest mit 9 bis 23 C-Atomen und
- R² ein gesättigter Alkylrest ausgewählt aus der Gruppe Methyl, Methyl, n-Propyl und i-Propyl
als Koaleszenzmittel.

Der Rest R¹ kann linear oder verzweigt, gesättigt oder einfach olefinisch ungesättigt sein. Vorzugsweise ist der Rest R¹ ein gesättigter Alkylrest.
Vorzugsweise eignen sich die Ester der Formel (I) für die Herstellung von Beschichtungen wie Lacken, Farben und dergleichen, aber auch für Klebstoffe.

In einer Ausführungsform setzt man die Ester der Formel (I) als Koaleszenzmittel bei der Herstellung von Beschichtungen jeglicher Art auf Basis wässriger Polymer- bzw. Latex-Dispersionen ein.
Ein besonders bevorzugtes Gebiet für den Einsatz der Ester (I) als Koaleszenzmittel sind die so genannten (wasserbasierten) Dispersionsfarben.

Beispiele geeigneter Fettsäuren, die als Säurebaustein der Ester (I) in Frage kommen, sind etwa:
- Decansäure (Caprinsäure), Undecansäure, Dodecansäure (Laurinsäure), Tridecansäure, Tetradecansäure (Myristinsäure), Pentadecansäure, Hexadecansäure (Palmitinsäure), Heptadecansäure und Octadecansäure (Stearinsäure), Isostearinsäure, Nonadecansäure, Eicosansäure (Arachinsäure), Dodecansäure (Behensäure). Diese Fettsäuren zählen zu den gesättigten Fettsäuren. Sie werden im Rahmen der vorliegenden Erfindung vorzugsweise als Säurebausteine der Ester (I) eingesetzt.
- 10-Undecensäure, Lauroleinsäure, Myristoleinsäure, Palmitoleinsäure, Petroselinsäure, Ölsäure, Elaidinsäure, Gadoleinsäure, Erucasäure, Brassidinsäure. Diese Fettsäuren zählen zu den ungesättigten Fettsäuren, die eine C=C-Doppelbindung enthalten.

Die Ester (I) leiten sich, was den Säurebaustein angeht, vorzugsweise von Fettsäuren mit 10 bis 18 C-Atomen ab. Diese können linearen oder verzweigt, gesättigt oder einfach olefinisch ungesättigt sein. Fettsäuren nativen Ursprungs sind bevorzugt.
In einer Ausführungsform leiten sich die Ester (I), was den Säurebaustein angeht, von linearen, einfach olefinisch ungesättigten Fettsäuren ab.
In einer Ausführungsform leiten sich die Ester (I), was den Säurebaustein angeht, von verzweigten, gesättigten Fettsäuren ab.
In einer Ausführungsform leiten sich die Ester (I), was den Säurebaustein angeht, von linearen, gesättigten Fettsäuren ab.

In einer Ausführungsform setzt man als Ester (I) im Rahmen der vorliegenden Erfindung Methylester ein, also Verbindungen, die durch die allgemeine Formel (I-a) gekennzeichnet sind

R¹-COOCH₃ (I-a)

worin R¹ ein gesättigter Alkylrest mit 9 bis 18 C-Atomen ist. Dabei sind Laurinsäuremethylester, Myristinsäuremethylester und Palmitinsäuremethylester oder deren Mischungen (wie sie insbesondere vorliegen, wenn man zur Herstellung der Verbindungen (I-a) auf natürliche Rohstoffe, insbesondere auf Basis pflanzlicher Triglyceride zurückgreift) ganz besonders bevorzugt.

In einer Ausführungsform setzt man als Ester (I) im Rahmen der vorliegenden Erfindung Isopropylester ein, also Verbindungen, die durch die allgemeine Formel (I-b) gekennzeichnet sind

R¹-COOCH(CH₃)₂ (I-b)

worin R¹ ein gesättigter Alkylrest mit 9 bis 18 C-Atomen ist.
Dabei sind Laurinsäureisopropylester, Myristinsäureisopropylester und Palmitinsäureisopropylester oder deren Mischungen ganz besonders bevorzugt.

Die Ester (I) sind als Koaleszenzmittel sehr effizient, was daran ersichtlich ist, dass sie die minimale Filmbildungstemperatur (MFT) von wässrigen Polymerdispersionen ganz ausgezeichnet zu senken vermögen. Außerdem sind Beschichtungen (Filme), die unter Verwendung von wässrigen Polymerdispersionen mit einem Gehalt an den erfindungsgemäß einzusetzenden Ester (I) erhältlich sind, nach vierwöchiger Lagerung in der Regel deutlich härter und damit robuster und weniger schmutzanfällig als solche, die mit handelsüblichen Koaleszenzmitteln hergestellt wurden. Ein weiterer Vorteil der erfindungsgemäß einzusetzenden Ester (I) ist, dass ihr Siedepunkt oberhalb von 250°C liegt, was entsprechend der EU-Regelungen 1999/42/EG und 2004/42 unter "VOC-frei" einzustufen ist.

Von Interesse sind auch Untersuchungen der Anmelderin im Hinblick auf die Hydrolyseneigung der erfindungsgemäßen Ester (I) im Vergleich zu Estern, die diesen strukturell nahe stehen und/oder im Vergleich zu handelsüblichen Hydroxyester-basierten Koaleszenzmitteln. So hat die Anmelderin festgestellt, dass Laurinsäuremethylester und Laurinsäureisopropylester in wässrig-alkalischem Milieu eine geringere Hydrolyseneigung aufweisen als Laurinsäurebutylester und das handelsübliche 2,2,4-Trimethyl-1,3-pentandiol-mono-isobutyrat (TMB). Die Ergebnisse dieser Untersuchungen der Anmelderin sind überraschend und können als Überwindung eines technischen Vorurteils (vergleiche die oben abgehandelten EP 026,982 A1) angesehen werden.

Die erfindungsgemäß einzusetzenden Ester (I) können in reiner Form oder in Form von Mischungen untereinander eingesetzt werden. Gewünschtenfalls kann man die Ester (I) auch in Kombination mit bekannten Koaleszenzmitteln einsetzen.

Ein weiterer Gegenstand der Erfindung ist dementsprechend die Verwendung von Zusammensetzungen enthaltend
(1) ein oder mehrere der oben definierten Ester (I) und
(2) ein oder mehrere weitere - von den Estern (I) verschiedene - Verbindungen ausgewählt aus der Gruppe der Ester, Ether und Hydroxyester
als Koaleszenzmittel, insbesondere bei der Herstellung von Beschichtungen jeglicher Art auf Basis wässriger Polymer- bzw. Latex-Dispersionen und vorzugsweise bei der Herstellung von Beschichtungen auf Basis von Dispersionsfarben.
Wie bereits ausgeführt kommen die erfindungsgemäß einzusetzenden Ester (I) insbesondere als Koaleszenzmittel für wässrige Dispersionen von zu verfilmenden Polymer- bzw. Latexteilchen zum Einsatz. Dies gilt sowohl, wenn die Ester (I) allein (in Form einer reinen Species oder einer Mischung verschiedener Species) oder in Abmischung mit anderen - davon verschiedenen - Koaleszenzmitteln eingesetzt werden.

Die Ester (I) werden dabei vorzugsweise (je nach MFT des Polymers) in Mengen von 0,1 bis 40 Gew.-% und insbesondere 2 bis 6 Gew.-% - bezogen auf die Menge der Polymer- bzw. Latexteilchen, deren Mindestfilmbildetemperatur gesenkt werden soll - eingesetzt.
In einer anderen Betrachtungsweise kann man die Menge der Ester (I) auf eine fertige Beschichtungsrezeptur beziehen, die auf eine Oberfläche appliziert werden soll. In dieser Hinsicht werden die Ester (I) vorzugsweise (je nach MFT des Polymers) in Mengen von 0,1 bis 5 Gew.-% und insbesondere 0,5 bis 2% Gew.-% - bezogen auf die gesamte Beschichtungsrezeptur - eingesetzt.
Der Fachmann kann die Menge der Ester (I) je nach der Zusammensetzung einer konkreten Dispersion bzw. einer konkreten Beschichtungsrezeptur variieren und bei Bedarf auch höhere Mengen an Estern (I) einsetzen, insbesondere wenn das System Polymere mit hoher Mindestfilmbildetemperatur enthält und/oder eine Senkung auf möglichst niedrige MFT-Werte erfolgen soll.

Hinsichtlich der Natur der in den wässrigen Dispersionen vorhandenen Polymer- bzw. Latexteilchen gelten keine besonderen Beschränkungen. Es können somit alle dem Fachmann für Beschichtungszwecke einschlägig bekannten Polymeren und Copolymeren eingesetzt werden.
Die wässrigen Dispersionen können im Übrigen je nach gewünschtem Anwendungszweck bzw. der Art der Beschichtung weitere, dem Fachmann einschlägig bekannte Additive und Zusatzstoffe enthalten.
Die erfindungsgemäßen Ester (I) können den wässrigen Dispersionen unmittelbar nach der Herstellung, die vorzugsweise durch Emulsionspolymerisation erfolgt, aber auch zu einem späteren Zeitpunkt, etwa während der Herstellung eines Beschichtungsstoffes, zudosiert werden.

Die wässrigen Dispersionen mit einem Gehalt an erfindungsgemäß einzusetzendem Ester (I) können im Prinzip auf beliebige Oberflächen aufgebracht werden, beispielsweise auf Holz, Metall, Kunststoff, Glas, Papier, Beton, Mauerwerk und Putze.

### Beispiele

### Eingesetzte Substanzen

### Polymerdispersionen

- Mowilith LDM 7451: Wässrige Polymerdispersion auf Basis Acrylsäureester/Methacrylsäureester/Styrol (Fa. Celanese)
- Mowilith LDM 7717: Wässrige Polymerdispersion auf Basis Acrylsäureester/Methacrylsäureester (Fa. Celanese)
- Acronal 290D: Wässrige Polymerdispersion auf Basis Butylacrylat/Styrol (Fa. BASF)
- Acronal S 790: Wässrige Polymerdispersion auf Basis Butylacrylat/Styrol (Fa. BASF)
- Lipaton AE 4620: Wässrige Polymerdispersion auf Basis Styrol/Acrylsäureester (Fa. Polymer Latex)
- Mowilith DM 611: Wässrige Polymerdispersion auf Basis Styrol/Acrylsäureester (Fa. Celanese)
- Mowilith DM 2452: Wässrige Polymerdispersion auf Basis VAC/VEOVA/Acrylsäureester (Fa. Celanese)
- Rhoplex SG 30: Wässrige Polymerdispersion auf Basis Acrylsäureester (Fa. Rohm & Haas)

### Koaleszenzmittel

- B1: C₁₂₋₆-Fettsäuremethylester (C₁₂-Gehalt ca. 70%) = erfindungsgemäßes Koaleszenzmittel
- V1: 2,2,4-Trimethyl-1,3-pentandiol-mono-isobutyrat (TMB) = handelsübliches Koaleszenzmittel

### Herstellung und Beurteilung der Beschichtungen

Der Zusatz des zu prüfenden Koaleszenzmittels (B 1 oder V1) zur jeweiligen Polymerdispersion erfolgte unter Rühren. Nach 24-stündiger Reifezeit wurde dann per Rakel auf Glasplatten appliziert (Naßschichtdicke 150µm). Nach erfolgter Trocknung (ca. 24 Stunden bei 20 °C) wurden die Filme beurteilt und zwar unter Verwendung verschiedener Prüfmethoden.
Die Prüfergebnisse sind den Tabellen 1 und 2 zu entnehmen.

### Verwendete Prüfmethoden

- Die Prüfung der **Mindestfilmbildetemperatur** (MFT) erfolgte gemäß DIN 53787.
- Die Prüfung der **Pendelhärte** nach König erfolgte gemäß DIN 53157.

**Tabelle 1**

| eingesetzte Polymer-dispersion | MFT (°C) | | |
|---|---|---|---|
| | ohne Zusatz | mit 1 % B1 | mit 2% B1 |
| Mowilith LDM 7451 | 13 | 3 | 0 |
| Mowilith DM 611 | 17 | 7 | 0 |
| Acronal S 790 | 17 | 12 | 0 |
| Mowilith DM 2452 | 11 | 5 | 3 |
| Lipaton AE 4620 | 18 | 9 | 0 |
| Acronal 290 D | 18 | 10 | 0 |

**Tabelle 2**

| eingesetztes Harz | nötige Menge für MFT = 0 °C | | Pendelhärte | |
|---|---|---|---|---|
| | B1 | V1 | B1 | V1 |
| Mowilith LDM 7451 | 2% | 2% | 49 | 36 |
| Mowilith LDM 7717 | 3% | 3% | 46 | 28 |
| Acronal 290D | 2% | 3% | 25 | 15 |
| Acronal S 790 | 2% | > 3% | 35 | < 15 |
| Lipaton AE 4620 | 2% | > 3% | 21 | 13 |
| Mowilith DM 611 | 2% | > 3% | 25 | < 20 |
| Mowilith DM 2452 | 3% | 3% | 11 | 10 |
| Rhoplex SG 30 | 3% | 3% | 15 | 11 |

| | | | | |
|---|---|---|---|---|
| in den Tabellen 1 und 2 bedeuten: **"nötige Menge für MFT = 0 °C"** = erforderliche Menge an Koaleszenzmittel B 1 bzw. V1 - jeweils in Gew.% bezogen auf die Polymerdispersionen (in der Form wie diese vom Hersteller geliefert wurden), um die Mindestfilmbildungstemperatur (MFT) der eingesetzten Polymerdispersion auf einen Wert von 0 °C zu senken. **Pendelhärte** = Pendelhärte gemessen nach 4 Wochen (bei Dosierung von B 1 bzw. V 1 in einer Menge, um die Mindestfilmbildungstemperatur des eingesetzten Harzes auf einen Wert von 0 °C zu senken. **% B1 bzw. V1** = die der wässrigen Polymerdispersion zugesetzte Menge an Koaleszenzmittel ist in Gew.-% - bezogen auf die Polymerdispersionen (in der Form wie diese vom Hersteller geliefert wurden) - angegeben. | | | | |

Der erfindungsgemäße Ester B 1 weist in mehrfacher Hinsicht Vorteile gegenüber einem der industriellen Standards, nämlich V1, auf:
- Er ist als Koaleszenzmittel in manchen Beispielen gleichwertig, in vielen Fällen jedoch effizienter als der Standard, was darin äußert, dass er die Mindestfilmbildetemperatur (MFT) einer breiten Palette von Harzen besser zu senken vermag.
- Weiterhin sind die Filme nach 4-wöchiger Lagerung bei Einsatz des erfindungsgemäßen Esters B 1 deutlich härter und damit robuster und weniger schmutzanfällig als solche, die unter Einsatz des industriellen Standards V1 hergestellt wurden.

## Patentansprüche

1. Verwendung von Estern der allgemeinen Formel (I),
R¹-COOR² (I)
worin R¹ ein gesättigter Alkylrest mit 9 bis 23 C-Atomen und R² ein gesättigter Alkylrest ausgewählt aus der Gruppe Methyl, Ethyl, n-Propyl und i-Propyl ist,
als Koaleszenzmittel.

2. Verwendung nach Anspruch 1 bei der Herstellung von Beschichtungen jeglicher Art auf Basis wässriger Polymer- bzw. Latex-Dispersionen.

3. Verwendung nach Anspruch 1 bei der Herstellung von Beschichtungen auf Basis von wässrigen Dispersionsfarben.

4. Verwendung von Zusammensetzungen enthaltend
(1) ein oder mehrere der Ester (I) gemäß Anspruch 1 und
(2) ein oder mehrere weitere - von den Estern (I) verschiedene - Verbindungen ausgewählt aus der Gruppe der Ester, Ether und Hydroxyester
als Koaleszenzmittel.

5. Verwendung nach Anspruich 4 bei der Herstellung von Beschichtungen jeglicher Art auf Basis wässriger Polymer- bzw. Latex-Dispersionen.

6. Verwendung nach Anspruch 4 bei der Herstellung von Beschichtungen auf Basis von wässrigen Dispersionsfarben.

7. Verwendung nach einem der Ansprüche 1 bis 6, wobei der Rest R² in Formel (I) die Bedeutung Methyl hat.

8. Verwendung nach einem der Ansprüche 1 bis 10, wobei der Rest R² in Formel (I) die Bedeutung Isopropyl hat.

## Claims

1. Use of esters of the general formula (I),
R¹-COOR² (I)
in which R¹ is a saturated alkyl radical having 9 to 23 C atoms and R² is a saturated alkyl radical selected from the group of methyl, ethyl, n-propyl, and isopropyl,
as coalescents.

2. Use according to Claim 1 in the production of coatings of any kind based on aqueous polymer dispersions or latex dispersions.

3. Use according to Claim 1 in the production of coatings based on aqueous emulsion paints.

4. Use of compositions comprising
(1) one or more of the esters (I) of Claim 1 and
(2) one or more further compounds - different from the esters (I) - selected from the group of esters, ethers, and hydroxyesters
as coalescents.

5. Use according to Claim 4 in the production of coatings of any kind based on aqueous polymer dispersions or latex dispersions.

6. Use according to Claim 4 in the production of coatings based on aqueous emulsion paints.

7. Use according to any of Claims 1 to 6, wherein the radical R² in formula (I) has the definition methyl.

8. Use according to any of Claims 1 to 6, wherein the radical R² in formula (I) has the definition isopropyl.

## Revendications

1. Utilisation d'esters de formule générale (I),
R¹-COOR² (I)
dans laquelle R¹ est un radical alkyle saturé ayant de 9 à 23 atomes de carbone et R² est un radical alkyle saturé choisi dans l'ensemble constitué par les groupes méthyle, éthyle, n-propyle et isopropyle,
en tant qu'agents de coalescence.

2. Utilisation selon la revendication 1, dans la production de revêtements de toute nature à base de dispersions aqueuses de polymère ou latex.

3. Utilisation selon la revendication 1, dans la production de revêtements à base de peintures en dispersion aqueuse.

4. Utilisation de compositions contenant
(1) un ou plusieurs esters (I) selon la revendication 1 et
(2) un ou plusieurs autres composés - différents des esters (I) - choisis dans le groupe des esters, éthers et hydroxyesters
en tant qu'agents de coalescence.

5. Utilisation selon la revendication 4, dans la production de revêtements de toute nature à base de dispersions aqueuses de polymère ou latex.

6. Utilisation selon la revendication 4, dans la production de revêtements à base de peintures en dispersion aqueuse.

7. Utilisation selon l'une quelconque des revendications 1 à 6, dans laquelle le radical R² dans la formule (I) a la signification du groupe méthyle.

8. Utilisation selon l'une quelconque des revendications 1 à 6, dans laquelle le radical R² dans la formule (I) a la signification du groupe isopropyle.
